# EUROPÄISCHE PATENTSCHRIFT

(11) **EP 0 989 692 B1**
(45) Veröffentlichungstag und Bekanntmachung des Hinweises auf die Patenterteilung: **26.07.2006**
(21) Anmeldenummer: 99110696.4
(22) Anmeldetag: 02.06.1999
(51) Int. Cl.: H04B 10/105

(54) **Vorrichtung zur Steuerung der Strahlausrichtung in Satelliten-Laserkommunikationssystemen**
Apparatus for controlling the beam direction in a laser satellite communication system
Dispositif de commande de directivité de rayon dans un système de communication par satellite à laser

(30) Priorität: 21.09.1998 CH 192598
(43) Veröffentlichungstag der Anmeldung: 29.03.2000
(73) Patentinhaber: CONTRAVES SPACE AG, 8052 Zürich (CH)
(72) Erfinder: Meier, Carsten, 8052 Zürich (CH)
(74) Vertreter: OK pat AG

(56) Entgegenhaltungen:
- US-A- 4 577 282
- HOMAYOON ANSARI ET AL: "CHARGE-COUPLED DEVICE IMAGING SYSTEM FOR PRECISION BEAM STEERING INLASER COMMUNICATIONS" OPTICAL ENGINEERING, Bd. 34, Nr. 11, 1. November 1995 (1995-11-01), Seiten 3261-3264, XP000584985
- BAISTER G ET AL: "POINTING, ACQUISITION AND TRACKING FOR OPTICAL SPACE COMMUNICATIONS" ELECTRONICS AND COMMUNICATION ENGINEERING JOURNAL, Bd. 6, Nr. 6, 1. Dezember 1994 (1994-12-01), Seiten 271-280, XP000491933
- NIELSEN T T: "POINTING, ACQUISITION AND TRACKING SYSTEM FOR THE FREE SPACE LASER COMMUNICATION SYSTEM, SILEX" PROCEEDINGS OF THE SPIE, Bd. 2381, 7. Februar 1995 (1995-02-07), Seiten 194-205, XP000671266
- CA LINDLEY: "Top Level Design Document for project Australis-1" 16. Juni 1995 (1995-06-16), AUSTRALIAN SPACE RESEARCH INSTITUTE LTD.

## Beschreibung

Die Erfindung bezieht sich auf eine Vorrichtung zur Steuerung der Strahlausrichtung in Satelliten-Laserkommunikationssystemen nach dem Oberbegriff des Patentanspruchs **1**.

In optischen Strahlausrichtsystemen für Kommunikations- oder Interferometrische Anwendungen auf Satelliten besteht häufig die Notwendigkeit, einen Laserstrahl mit hoher Präzision von einer Basisstation zu einer Gegenstation auszurichten. Die dazu benötigte Genauigkeit ist abhängig von der Entfernung der beiden Stationen und der Divergenz des Laserstrahls. In Satellitennetzen sind beide Parameter meist durch die Konstellation der Satelliten und die für den Laser maximal verfügbare Leistung fest vorgegeben. Ein Erreichen der geforderten Ausrichtgenauigkeit ist daher nur durch entsprechend empfindliche Sensoren/Aktuatoren in Kombination mit einem aufwendigen Regelungskonzept möglich.

Erschwert wird dies zusätzlich noch durch die extremen Randbedingungen bei Raumfahrtanwendungen, die häufig zu einem schnelleren Verschleiss der Komponenten führen.

In einem Bericht von Homayoon Ansari mit Titel "Charge-coupled device imaging Systems for precision beam steering in laser communications", Optical Engineering, Band 34, Nr. 11, 1. November 1995, Seiten 3261 - 3264, wird ein System beschrieben, bei dem mit Hilfe einer CCD-Kamera und einem Prozessor die Nachführung und der Vorhalt einer Laserstrahl-Kommunikation gelöst wird.

Um aber trotzdem die gewünschte Genauigkeit über die gesamte Lebensdauer zu erhalten, wird im folgenden ein Konzept für eine adaptive Regelung auf Basis eines digitalen Signalverarbeitungssystems vorgeschlagen. Die bisher verwendeten Regelsysteme zur Strahlausrichtung sind aufgrund der speziellen Randbedingungen, die beim Einsatz auf Satelliten zum Tragen kommen, nicht optimal. Analoge Regelsysteme sind aufgrund ihrer geringen Flexibilität und der damit verbundenen Probleme bei der Kompensation zeitinvarianter Prozesse nur bedingt geeignet. Da sich komplexere Strukturen (z.B. Zustandsregler höherer Ordnung, Prediktoren) nur mit hohem Aufwand realisieren lassen und die erreichbare Genauigkeit beschränkt ist, sind sie für den Einsatz in hochgenauen Strahlausrichtsystemen kaum nutzbar.

Digitale Regelsysteme auf der Basis von Mikrorechnern bieten zwar hohe Genauigkeiten und ermöglichen die Realisierung komplexerer Strukturen, sind aber aufgrund ihrer langen Rechenzeiten für schnelle dynamische Vorgänge eher ungeeignet. Insbesondere kostet in der Regel die Ausführung der für Strahlausrichtsysteme typischen mathematischen Operationen (*,/,exp, sin) viel Zeit, da die meisten Prozessoren Gleitkommaoperationen nicht direkt unterstützen. Diese müssen meist durch die Software übernommen werden, wodurch sich in einem regelungstechnischen System oft unvertretbar hohe Totzeiten ergeben.

Aus dem Top-level Design Dokument für das Projekt Australis-1 ist ein on-board data handling (OBDH) Subsystem bekannt. Dieses Subsystem mit Bus wurde entwickelt, um Systeme in internationalen Raumfahrzeugen soweit als möglich zu standardisieren. OBDH standardisiert die Unterhaltsfunktionen eines Raumfahrzeuges und definiert eine Auftellung zwischen Boden- und Weltraumsystemen. Dabei standardisiert OBDH sowohl die Hard- wie auch die Software eines onboard Computer (OBCs) sowie die Entwicklungsumgebung für die Software von OBCs. Zusätzlich erfasst das OBDH die Kommunikation zwischen Raumfahrzeug und Bodenstation.

Aufgabe der Erfindung ist es, eine Vorrichtung zur Steuerung der Strahlausrichtung in Satelliten-Laserkommunikationssystemen zu schaffen, mit dem die Nachteile des Standes der Technik vermieden werden.

Diese Aufgabe wird in vorteilhafter Weise erfindungsgemäss durch eine Vorrichtung nach Patentanspruch 1 gelöst.

Andere vorteilhafte Ausführungen der Erfindung ergeben sich aus den weiteren abhängigen Ansprüchen.

Die Erfindung wird nachfolgend beispielsweise an Hand einer Zeichnung näher erläutert. Es zeigt:
- **Fig. 1**: eine schematische Konfiguration eines Strahlausrichtsystems,
- **Fig. 2**: die Struktur eines digitalen Signalverarbeitungssystems,
- **Fig. 3**: ein adaptives Regelsystem zur optischen Strahlausrichtung,
- **Fig. 4**: einen Sensor-Kennlinienentzerrer mittels Lock-up Table (LUT) und
- **Fig. 5**: die Korrektur der Achsenkreuzkoppelung eines optischen Sensors.

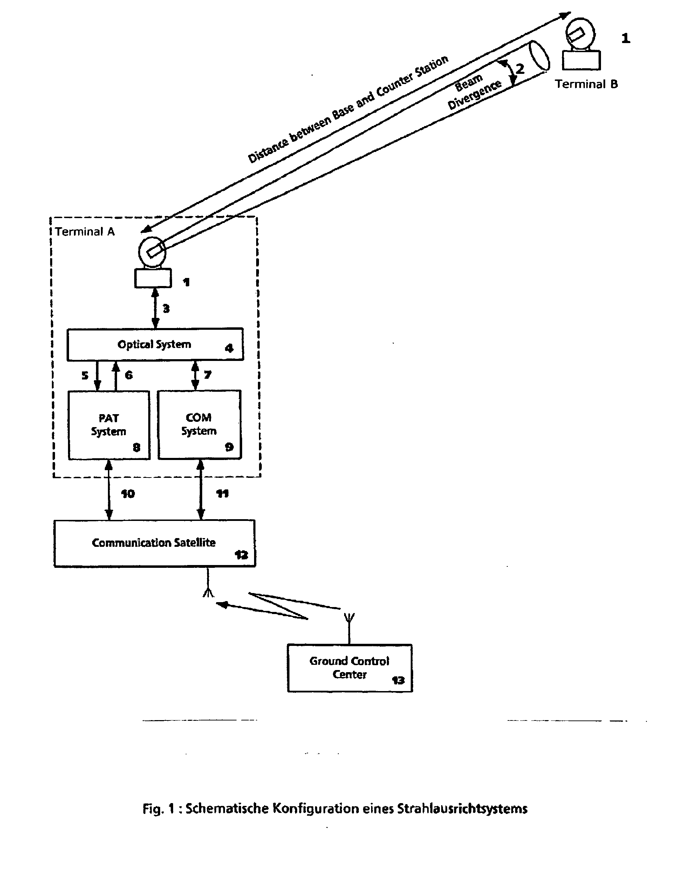

In **Fig. 1** ist die Strahlausrichtung zwischen zwei Laser-Kommunikationsterminals dargestellt, nämlich zwischen einem ersten Terminal **A** in einer sogenannten Basis-Station und einem zweiten Terminal **B** in einer Gegenstation, die sich in einem Abstand befinden. Jedes dieser Terminals **A** und **B** sendet über ein Endgerät **1** einen mit Daten modulierten Laserstrahl zur Gegenstation. Dieser wird aufgrund der Strahldivergenz **2** stark aufgeweitet, so dass nur ein Bruchteil der abgestrahlten optischen Leistung an der jeweiligen Gegenstation empfangen wird. Das empfangene Licht wird einem optischen System **4** über eine optische Verbindung **3** zugeführt und dort mit Sensoren detektiert. Die so gewonnenen elektrischen Signale werden einerseits einem Kommunikationssystem **9** über eine Höchstfrequenzverbindung **7** zur Rückgewinnung der Daten zugeführt, andererseits messen die Sensoren den Einfallswinkel des empfangenen Laserstrahls und geben diese Information über einen ersten Bus **5** an ein Strahlausrichtsystem **8** (**PAT**-System) weiter. Aufgrund dieser Information errechnet das Strahlausrichtsystem **8** die Korrekturen für den auszusendenden Laserstrahl und stellt über einen zweiten Bus **6** die Aktuatoren im optischen System **4** so ein, dass der auszusendende Laserstrahl exakt die Gegenstation trifft. Da zu Beginn des Verbindungsaufbaus noch keine optische Verbindung zwischen den Terminals **A** und **B** besteht, erhält das Strahlausrichtsystem **8** über eine Daten-Verbindung **10** von einer Kommunikationssatelliten-Einheit **12** die Information über die Position des Terminals **B**. Das Kommunikationssystem **9** ist ebenfalls über eine Daten-Verbindung **11** mit der Einheit **12** verbunden.

### Die Anlage nach Fig. 1 funktioniert folgendermassen:

Von einer Bodensteuerzentrale **13** (Ground Control Center) wird ein Befehl an die zwei an einer Übertragung beteiligten Satelliten zum Aufbau einer optischen Verbindung gesendet. Daraufhin erfolgt im Bordrechner jedes Satelliten die Bestimmung der eigenen Position und Lage sowie der Lage des Gegensatelliten. Aus diesen Werten kann ein Vektor für die Ausrichtung der Aktuatoren gebildet werden, der sich aus zwei Ausrichtwinkeln (Azimut und Elevation) zusammensetzt. Diese Winkel werden an den Spiegeln und Mechanismen des optischen Systems eingestellt und laufend aktualisiert. Dies ist notwendig, da sich die beiden Satelliten ständig relativ zueinander bewegen. Gleichzeitig wird mit den Sensoren der Himmel abgetastet, um den Laserstrahl der Gegenstation zu finden.

Ist dieser detektiert, wird in beiden Satelliten die Ausrichtung des abgestrahlten Laserstrahls so verändert, dass er exakt in die Richtung des einfallenden Laserstrahls der Gegenstation blickt. Die beiden Terminals haben jetzt eine optische Verbindung zueinander, die im weiteren Verlauf des Verbindungsaufbaus immer besser ins Zentrum des optischen Systems einjustiert wird, bis eine Einkopplung in eine Glasfaser möglich wird. Ist dies erreicht, so werden noch die Laserfrequenzen aufeinander abgestimmt, und das System ist zur Übertragung von Daten bereit.

Da sich die Satelliten ständig zueinander bewegen, arbeitet das Strahlausrichtsystem fortlaufend mit der Aufgabe, den Strahl der Gegenstation im optischen Zentrum zu halten und den ausgesendeten Strahl mit hoher Präzision auf die Gegenstation auszurichten. Dazu verfügt es über mehrere, vorzugsweise drei Regelkreise, um die extremen Anforderungen an die Ausrichtung zu erfüllen.

Die Anlage nach **Fig. 1** mit der erfindungsgemässen Vorrichtung **8** zur Steuerung der Strahlausrichtung in Satelliten-Laserkommunikationssystemen erlaubt eine hochgenaue und dynamische Ausrichtung eines Laserstrahls über grosse Distanzen mit dem Ziel, einen auf den Laserstrahl aufmodulierten Datenstrom zwischen zwei Satelliten bidirektional zu übertragen.

Die wichtigsten Parameter für die Strahlausrichtung eines solchen Systems sind: der Abstand zwischen beiden Terminals, der Öffnungswinkel des abgestrahlten Laserstrahls, die

Laserleistung und die Genauigkeit der Strahlausrichtung. Diese Parameter sind grundsätzlich eng miteinander verknüpft, so dass wenn sich einer dieser vier Parameter ändert, die anderen drei angepasst werden müssen, um nach wie vor eine sichere Datenübertragung zu gewährleisten. Da die drei ersten Grössen durch die Anordnung der Satelliten und/oder die Leistungsmerkmale und die Bauform der verwendeten Komponenten vorgegeben sind, sind sie im wesentlichen nicht nach Wunsch zu beeinflussen. Durch die Erfindung wurde jedoch die Erkenntnis gewonnen, dass die Genauigkeit der Strahlausrichtung durch ein mehr oder weniger fortschrittliches Regelungssystem beeinflusst werden kann.

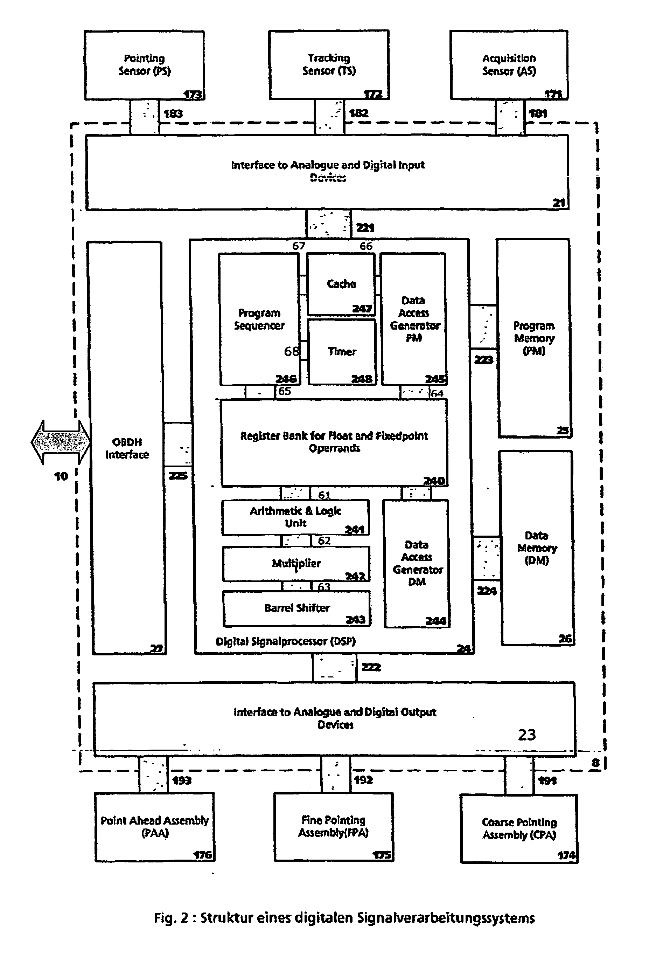

Die erfindungsgemässe Vorrichtung zur Steuerung der Strahlausrichtung in Satelliten-Laserkommunikationssystemen nach **Fig. 2** umfasst einen über je einen Bus **221** bzw. **222** zwischen einem Eingangs-Interface **21** und einem Ausgangs-Interface **23** eingefügten Digital-Signalprozessor **24** (DSP), an den über je einen Bus **223** bzw. **224** ein Programm-Speicher **25** (Program Memory: PM) und ein Daten-Speicher **26** (Data Memory: DM) getrennt angeschlossen sind, wobei in den externen Speichern **25** und **26** Programme und Parameter abgelegt werden können. Die Interfaces **21** und **23** stellen die Schnittstellen zur analogen/digitalen Welt dar. An das Interface **21** sind über Busse **181, 182** und **183** Sensoren **171, 172** bzw. **173** angeschlossen, die Bestandteile des optischen Systems **4** in **Fig. 1** sind, in der die Busse **181, 182** und **183** zusammengefasst durch das Bezugszeichen **5** dargestellt sind. An das Interface **23** sind über Busse **191, 192** und **193** Aktuatoren **174, 175** bzw. **176** angeschlossen, die ebenfalls Bestandteile des optischen Systems **4** in **Fig. 1** sind, in der die Busse **191, 192** und **193** zusammengefasst durch das Bezugszeichen **6** dargestellt sind. Mit den Aktuatoren erfolgt die Ausrichtung des Laserstrahls auf die Gegenstation. Dies könnten beispielsweise elektromotorische Antriebsmechanismen oder piezoelektrische Kippspiegelelemente sein. Der digitale Signalprozessor **24** (**Fig. 2**) umfasst in seiner internen Struktur im wesentlichen einen Zwischenspeicher **240** für Gleitkomma- und Festkommaoperationen, an den über Busse **61, 62, 63** eine arithmetisch/logische Einheit (ALU) **241,** ein Multiplizierer **242** und ein Schieberegister (Barrel Shifter) **243** sowie ein Zugriffsgenerator **244** (Data Access Generator: DM) für den Datenspeicher **26** angeschlossen sind. Der Digital-Signalprozessor **24** (DSP) umfasst zudem einen Zugriffsgenerator **245** (Data Access Generator PM) für den Programmspeicher **25** und eine Steuereinheit **246** (Programm Sequencer), die ebenfalls über Busse **64, 65** an den Zwischenspeicher **240** angeschlossen sind. Der Zugriffsgenerator **245** und die Steuereinheit **246** sind unter sich über Busse **66, 67** und einen Befehlzwischenspeicher **247** (Cache) verbunden. Schliesslich ist die Steuereinheit **246** ebenfalls über einen Bus **68** an einen Zeitgeber **258** (Timer) angeschlossen. Die Vorrichtung **8** nach **Fig. 2** umfasst zudem ein OBDH-Interface **27** (On Board Data Handling), das über einen Bus **225** an den Digital-Signalprozessor **24** und über den Bus **10** an die Kommunikationssatelliten-Einheit **12** (**Fig. 1**) angeschlossen ist.

Die Vorrichtung zur Steuerung der Strahlausrichtung in Satelliten-Laserkommunikationssystemen nach **Fig. 2** funktioniert folgendermassen:

Das Strahlausrichsystem arbeitet nach einem dreistufigen Konzept, dem weitere Stufen unterlagert sind. Die drei Hauptstufen werden als Vorhaltung (Pointing), Akquisition (**A**cquisition) und Nachführung (**T**racking) bezeichnet, aus denen sich auch die Kurzform solcher **PAT**-Systeme ableitet. Jede Stufe kennzeichnet eine bestimmte Phase während des Verbindungsaufbaus und der Datenübertragung.

Die erste Phase (Pointing) findet statt, nachdem die Satelliten von der Bodenstation (Ground Control Center) den Befehl zum Verbindungsaufbau bekommen haben. Sie ist dadurch gekennzeichnet, dass die Terminals ihre Aktuatoren auf die Gegenstation ausrichten und mit ihren Sensoren nach dem Laserstrahl der Gegenstation suchen. Beide Terminals haben zu diesem Zeitpunkt noch keine optische Verbindung zueinander. Diese Phase wird auch als "Open Loop Pointing" bezeichnet, da die Ausrichtung hier ausschliesslich auf den aus einem Orbitmodell gewonnenen Werten beruht. Im regeltechnischen Sinne handelt es sich hier um eine reine Steuerung.

Haben die Sensoren der Terminals den Laserstrahl der Gegenstation detektiert, so spricht man von der Akquisitionsphase, in der eine schrittweise Verbesserung der Strahlausrichtung, die Strahleinkopplung in eine Glasfaser und die Abstimmung der Laser erfolgt. Die Strahlausrichtung hier erfolgt nicht mehr auf der Grundlage berechneter Werte, sondern auf der Basis der gemessenen Abweichungen des einfallenden Laserstrahls der Gegenstation vom optischen Zentrum des Systems. Die Regler arbeiten nun mit dem Ziel diese Abweichung immer weiter zu minimieren. Ist diese Abweichung kompensiert, so ist auch der ausgesendete Laserstrahl exakt auf den Gegensatelliten ausgerichtet, da der einfallende Laserstrahl der Gegenstation und der ausgesendete Laserstrahl über das gleiche optische System laufen. Jede Änderung des einfallenden Strahls zum optischen Zentrum hin bewirkt zugleich auch eine Verbesserung der Ausrichtung des ausfallenden Strahls. In diesem Sinne handelt es sich hier um eine Regelung.

Nach der Akquisitionsphase ist das System bereit zur Datenübertragung. Während dieser Zeit hat das Strahlausrichtsystem die Aufgabe, die Verbindung trotz der Bewegung der beiden Satelliten zueinander aufrechtzuerhalten. Man bezeichnet diese Arbeitsstufe als Trackingphase. Dies ist die Hauptarbeitsstufe des Systems. Die meisten Satelliten-Netzwerke sind durch die Anordnung ihrer Satelliten so ausgelegt, dass es im Idealfall nur einmal nach dem Start notwendig ist, die Verbindung zu etablieren. Im weiteren Verlauf bleiben die Verbindungen dann ständig hergestellt, und eine Neu-Akquisition ist nicht notwendig. Jede dieser Arbeitsstufen besteht noch aus einer Reihe weiterer Unterstufen und Phasen, die die vorliegende Erfindung nicht direkt tangieren.

Ein solches Verfahren wird in vorzüglicher Weise mit Hilfe der Vorrichtung zur Steuerung der Strahlausrichtung in Satelliten-Laserkommunikationssystemen nach **Fig. 2** durchgeführt, die die Innenschaltung des Digital-Signalprozessors (DSP) als physisches Blockschaltbild darstellt. Im Zwischenspeicher **240** werden die Operanden für die Berechnungen abgelegt. Hier können sowohl Gleitkomma- als auch Festkommazahlen gespeichert werden. Der Prozessor **24** verfügt über drei separate spezialisierte Recheneinheiten, die zeitlich parallel arbeiten können. In der Einheit **241** (ALU) werden sowohl lineare mathematische Operationen wie Addition und Subtraktion, als auch logische Verknüpfungen wie UND und ODER ausgeführt. Der Multiplizierer **242** führt Gleitkomma- oder Festkommamultiplikationen in einem einzigen Zyklus aus. Das Schieberegister **243** kann Rechts- und Linksverschiebungen sowie Rotation von Operanden durchführen. Mit diesen grundlegenden Operationen, die mit sehr hoher Geschwindigkeit (bis zu **120** Millionen pro Sekunde) durchgeführt werden, können sehr komplexe Algorithmen bei hohen Bandbreiten realisiert werden.

Da der interne Zwischenspeicher **240** des Prozessors **24** nur eine geringe Speichertiefe hat, verfügt das System über die externen Speicher **25** und **26,** auf die mittels der Zugriffsgeneratoren **244** und **245** zugegriffen wird. Dadurch, dass der Prozessor **24** mit zwei getrennten Speicherbereichen arbeitet, auf die zeitlich parallel zugegriffen werden kann, können die für eine Operation benötigten zwei Operanden in einem einzigen Verarbeitungsschritt gelesen, verknüpft und das Ergebnis im Zwischenspeicher **240** abgelegt werden.

Die Steuereinheit **246** zusammen mit dem Befehlzwischenspeicher **247** (Cache) steuern die internen Abläufe im Prozessor **24.** Dabei holt sich die Steuereinheit die im Zugriffsgenerator **245** für den Programmspeicher gespeicherten Instruktionen, übersetzt sie in ein für den Prozessor **24** verständliches Format und steuert die internen Abläufe so, dass der Befehl zeitlich, örtlich und funktional korrekt durchgeführt wird. Der Befehlzwischenspeicher **246** hat die Aufgabe, häufig benutzte Instruktionen zwischenzuspeichern. Dies hat den Vorteil, dass die Befehle nicht immer wieder aus dem langsameren Programm-Speicher geladen werden müssen.

Durch den Einsatz eines solchen Digital-Signalprozessors können daher die Vorteile analoger und digitaler Regelsysteme verbunden und somit eine für die speziellen Anforderungen im Raumfahrtbereich optimale Lösung erreicht werden. Diese Systeme haben aufgrund ihrer speziellen Rechnerstruktur die Fähigkeit zur Parallelisierung von Operationen und ermöglichen damit sehr kurze Signalverarbeitungszeiten, das heisst hohe Reglerbandbreiten. Durch die Trennung von Programm und Datenspeicher (Havard-Architektur) ist es möglich, während eines Bearbeitungsschrittes gleichzeitig zwei Operanden zu laden, sie miteinander zu verknüpfen und das Ergebnis abzuspeichern.

Dieser Digital-Signalprozessor kann das Arbeiten mit Gleitkommazahlen direkt unterstützen und so zeitaufwendige Konvertierungsalgorithmen überflüssig machen. Die arithmetischen Recheneinheiten der meisten digitalen Signaiprozessoren ermöglichen darüber hinaus direkte Gleitkommamultiplikation, Gleitkommaaddition und Festpunktdivision in einem Verarbeitungsschritt. Dadurch wird eine hocheffiziente Ausführung der für Strahlausrichtsysteme typischen Algorithmen wie Koordinatentransformationen oder Signalfilterung erreicht.

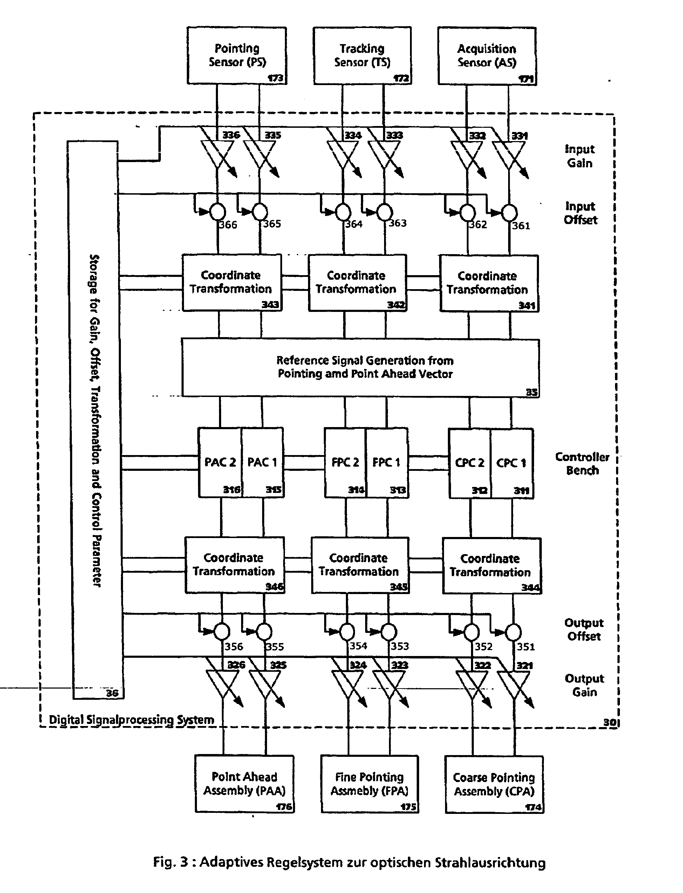

**Fig. 3** zeigt den funktionalen Aufbau der erfindungsgemässen Vorrichtung zur Steuerung der Strahlausrichtung in Satelliten-Laserkommunikationssystemen nach **Fig. 2**, von der sie daher eine Art Ersatzschaltung darstellt. Diese Vorrichtung umfasst einen als Regler arbeitenden Digital-Signalprozessor **30,** der demnach das funktionale Blockschaltbild eines adaptiven Mehrgrössenreglers darstellt, wie er auf dem in **Fig. 2** gezeigten Digital-Signalprozessor **24** implementiert wird. Die Ablenkung des Strahls erfolgt mit drei Aktuatoren **174, 175, 176** für die Grob-Ausrichtung, die Fein-Ausrichtung und den Winkel-Vorhalt. Für die Grob-Ausrichtung ist die Grob-Ausricht-Vorrichtung **174** (Coarse Pointing Assembly: CPA) vorgesehen, die einen zweiachsigen Ausrichtmechanismus darstellt, der den Laserstrahl in einem grossen Winkelbereich mit geringer Bandbreite ablenken kann. Für die Fein-Ausrichtung ist die Fein-Ausricht-Vorrichtung **175** (Fine Pointing Assembly: FPA) vorgesehen, die einen zweiachsigen Kippspiegel für eine Strahlablenkung in einem geringen Winkelbereich mit hoher Bandbreite darstellt. Für den Winkel-Vorhalt ist die Vorhalte-Vorrichtung **176** (Point Ahead Assembly: PAA) vorgesehen, die einen zweiachsigen Vorhaltespiegel zur Kompensation der Strahllaufzeit zwischen Basis- und Gegenstation umfasst.

Diese drei Aktuatoren werden über digital Regelalgorithmen angesteuert, die auf dem Signalprozessor implementiert und sowohl in ihrer Struktur als auch in ihren Parametern frei programmierbar sind. Sie umfassen somit drei Regler: einen Grob-Ausricht-Regler **311, 312** (Coarse Pointing Controller: CPC), einen Fein-Ausricht-Regler **313, 314** (Fine Pointing Controller: FPC) und einen Winkel-Vorhalte-Regler **315, 316** (Point Ahead Controller: PAC).

Die Regler **311/312, 313/314,** und **315/316,** sind jeweils doppelt ausgeführt, weil jeder Sensor und jeder Aktuator zweiachsig arbeitet. Jeder Sensor liefert zwei Signale x, y, die die Abweichung des empfangenen Laserstrahls vom optischen Zentrum des Systems angeben. Diese Signale werden nach einer Vorverarbeitung (Verstärkung (Gain), Offset, Koordinatentransformation und Sollwertaufschaltung (Control Parameter)) den Reglern **311** ... **316** (Controller-Bench) zugeführt. Hier ist für jede Achse ein Regelalgorithmus vorhanden, also z. B. der Regler **311** (CPC1) für die x-Achse und der Regler **312** (CPC2) für die y-Achse. Die errechneten Stellgrössen werden nach einer Nachverarbeitung dem Ausrichtmechanismus zugeführt, die den zu sendenden Strahl in zwei Achsen x, y ablenken und somit zur Gegenstation übertragen.

Der CPC-Regler **311, 312** steuert den Aktuator **174** für die Grobausrichtung des Laserstrahls und übernimmt die Strahlnachführung bei einer Relativbewegung der beiden Stationen zueinander. Zur Kompensation der Satellitenvibrationen steuert der FPC-Regler **313, 314** mit hoher Dynamik den FPA-Aktuator **175** an und hält damit den Laserstrahl im optischen Zentrum des Systems. Der PAC-Regler **315, 316** kompensiert durch den PAA-Aktuator **176** die bei grossen Entfernungen zwischen den Stationen nicht mehr vernachlässigbare Strahllaufzeit.

In **Fig. 3** sind die sich zum Empfang des Strahls der Gegenstation und zur Kontrolle der Genauigkeit der eigenen Strahlausrichtung im optischen System **4** der Anlage nach **Fig. 1** befindenden optischen Sensoren dargestellt, nämlich der Akquisitionssensor **171,** der Nachführsensor **172** und der Vorhaltesensor **173**, die sich durch ihren Sichtbereich und ihre Bandbreite unterscheiden. Mit den Sensoren **171** und **172** wird das Laserlicht der Gegenstation detektiert. Jeder Sensor misst mit unterschiedlicher Genauigkeit und Bandbreite den Strahlversatz des empfangenen Lichtes gegenüber dem optischen Zentrum. Die ermittelte Abweichung wird als Delta x bzw. Delta y dem DSP-System zugeführt. Der Sensor **171** (Acquisition Sensor: AS) ist ein Weitwinkel-Sensor mit geringer Bandbreite zum Auffinden der Gegenstation. Der Nachführsensor **172** (Tracking Sensor: TS) ist ein hochauflösender Präzisionssensor mit grosser Bandbreite zur Strahlnachführung. Der Vorhaltesensor **173** (Pointing Sensor: PS) ist ein Sensor zur Kontrolle der eigenen Strahlausrichtung.

Wie **Fig. 3** zeigt, ist jedem Aktuator **174, 175, 176** eine Offset-Stufe **351** bis **356** und eine Verstärker-Stufe **321, 322** bzw. **323, 324** bzw. **325, 326** vor- und jedem Sensor **171, 172, 173** eine Offset-Stufe **361** bis **366** und eine Verstärker-Stufe **331, 332** bzw. **333, 334** bzw. **335, 336** nachgeschaltet. Im einfachsten Fall ist dies lediglich ein Faktor, mit dem der eingelesene Messwert bzw. der ausgegebene Stellwert gewichtet wird.

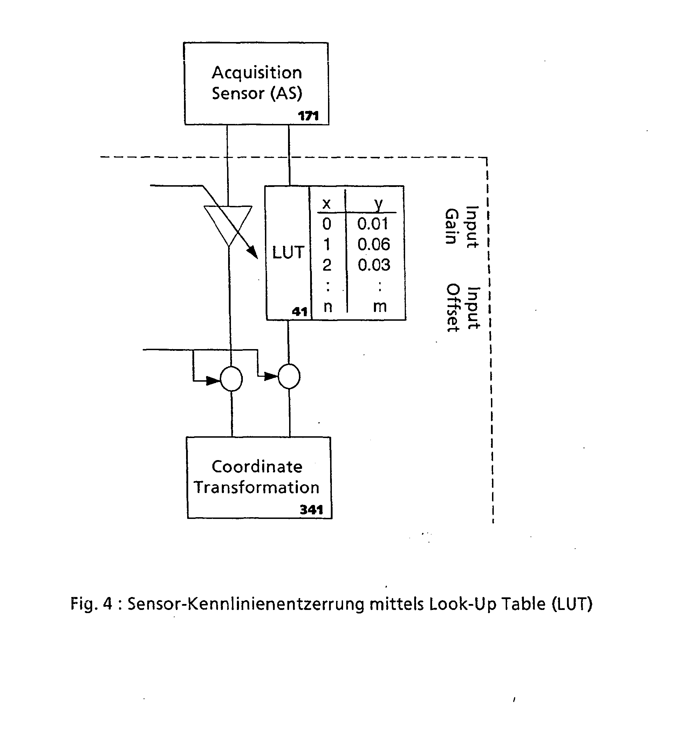

In einem zeitinvarianten System sind diese Faktoren konstant und werden durch die Steigung der Sensor/Aktuator-Kennlinie bestimmt. Bei Raumfahrtanwendungen können aber die Komponenten aufgrund der extremen Umweltbedingungen im Laufe ihrer Lebensdauer erheblich degradieren. Daher ist jeder Verstärker variabel ausgeführt und kann im Bedarfsfall durch geeignete Kalibrationsverfahren neu eingestellt werden. Durch dieses Verfahren wird selbst der Einsatz nichtlinearer Komponenten möglich, indem der entsprechende Verstärkerblock durch eine "Look Up"-Tabelle **41** (LUT-Schaltung) ersetzt wird (**Fig. 4**). Bei einem adaptiven Regler nach der in **Fig. 4** dargestellten Variante sind daher nicht nur die Parameter frei programmierbar, sondern es ist auch möglich die Struktur des Reglers zu verändern. Daraus ergibt sich, dass sich mittels derartiger digitalen Signalverarbeitungssysteme sehr komplexe Strukturen erzeugen lassen, die mittels herkömmlicher Analogsysteme undenkbar wären.

Diese Entzerrung der Kennlinie kann auch nachträglich, insbesondere auch noch nach dem Start des Satelliten durchgeführt werden, da die Struktur des Regelsystems jederzeit geändert werden kann.

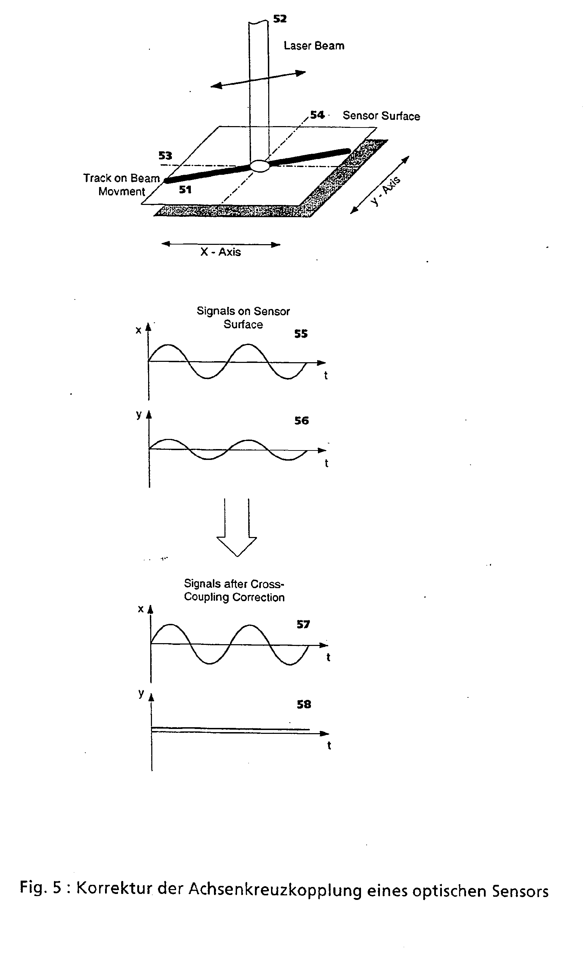

Zur Kompensation von Justage-Ungenauigkeiten findet sich nach jedem Sensor und vor jedem Aktuator die Möglichkeit zur Offsetkompensation. Sie ist ebenfalls programmierbar und kann während der Lebensdauer zur Kompensation von Degradationen herangezogen werden. Zur Korrektur der Abbildungsverhältnisse und ebenfalls zur Kompensation von Justage-Ungenauigkeiten sind jeweils vor und nach den Regelblöcken **311** bis **316** Transformations-Matrizen **341, 342, 343** bzw. **344, 345, 346** angeordnet. Diese korrigieren zunächst Abbildungsverhältnisse, die sich aufgrund der Bewegung der Mechanismen ändern. Sie können aber auch zur Kompensation von sich aus Einbautoleranzen ergebenden Kreuz- bzw. Überkopplungen eingesetzt werden (**Fig. 5**).

**Fig. 5** dient zur Erläuterung der Vorteile der parametrierbaren Koordinatentransformationen nach **Fig. 3**. Sie zeigt welche Auswirkungen ein nicht optimal einjustierter Sensor auf das Ausgangssignal hat. In **Fig. 5** sind beispielsweise die Spur **51** eines oszillierenden Laserstrahls **52,** die nicht exakt mit dem Koordinatenkreuz x, y des Sensors übereinstimmt, und die resultierenden Sensorsignale **55** und **56** dargestellt. Es ist ersichtlich, dass auf beiden Achsen eine Bewegung des Strahls detektiert wird, obwohl der Strahl nur in eine Richtung abgelenkt wird. Dies resultiert aus der Verdrehung des Sensors gegenüber der Bewegungsrichtung des Laserstrahls. Durch eine geeignete Koordinatentransformation kann man diese Effekte beseitigen und korrigierte Signale **57** und **58** erhalten. Durch die Erfindung wurde dabei die Erkenntnis gewonnen, dass selbst komplexere Degradationseffekte, wie sie zum Beispiel bei der Alterung optischer oder optomechanischer Elemente auftreten, mittels adaptiver Regelung kompensiert werden können.

Zudem ergibt sich daraus die Möglichkeit, den bei optischen Systemen sehr hohen Justageaufwand während der Fertigung auf ein Minimum zu reduzieren. In Kombination mit den Offset- und Verstärkungsparametern ergibt sich so eine sehr einfache Kalibrationsmöglichkeit für das gesamten Strahlausrichtsystem. Musste bisher jede optische Komponente in allen 6 Freiheitsgraden (3 x Position, 3 x Lage) hochgenau einjustiert werden, so genügt jetzt ein einfaches Einrichten auf Fertigungstoleranzen.

Der präzise Abgleich des Systems wird von einem geeigneten Algorithmus übernommen, der anhand eines eingekoppelten Strahls die Sensoren und Aktuatoren vermisst und die Parameter entsprechend setzt. Dieses Verfahren ist sogar nach dem Start des Systems im Orbit noch durchführbar. Ist kein passender Laserstrahl verfügbar, kann die Kalibrationsinformation auch durch das Verfolgen (Tracking) eines natürlichen Himmelskörpers gewonnen werden.

Die Regler-Einrichtung (Controller Bench) **311** bis **316** in **Fig. 3** enthält die einzelnen Regler des Strahlausrichtsystems, die aufgrund der guten Leistungsstärke (Performance) des Signalprozessors auch eine hohe Komplexität aufweisen können. Das Design der Regelalgorithmen kann auf herkömmliche Weise mit traditionellen Reglern, wie PID- (Proportional-, Integral,- Differential-Regler) oder Zustandsreglern, im kontinuierlichen Bereich erfolgen und später in den zeitdiskreten Bereich transformiert werden. Zusätzlich können aber auch die Vorteile des digitalen Reglerentwurfs (Dead beat etc. ) voll genutzt werden.

Im Ersatzschaltbild nach **Fig. 3** ist eine Referenzsignal-Einrichtung **35** dargestellt, die aus dem Ausricht-Vektor (Pointing Vector) und dem Winkel-Vorhalte-Vektor (Point Ahead Vector) des Satelliten die zur Regelung benötigten Referenzsignale erzeugt.

Im "Open Loop Pointing" erfolgt auf dieser Basis die Ausrichtung der Mechanismen und Spiegel der Aktuatoren **174** bis **176.** Ist die optische Verbindung zwischen den beiden Terminals hergestellt, erfolgt die Strahlausrichtung auf Basis der durch die Sensoren **171** bis **173** gemessenen Strahlabweichung. Die Referenzsignal-Einrichtung **35** erhält hierzu die korrigierten Sensorsignale von den Koordinaten-Transformationsblöcken **341** bis **343** und verteilt diese auf die entsprechenden Regler **311** bis **316.** Diese Verteilung ist notwendig, da je nach Arbeitsstufe unterschiedliche Sensoren zur Regelung herangezogen werden. So erfolgt z.B. die Regelung der Aktuatoren zur Feinausrichtung **175** und Grobausrichtung **176** während der Kommunikationsphase ausschliesslich auf Basis der Messdaten des Tracking-Sensors **172.**

Der Funktionsblock **36** ist für das Speichern der variablen Parameter, insbesondere für Verstärkung, Offset, Transformation und Steuerung zuständig. Wie erläutert handelt es sich hier um ein adaptives Regelkonzept; dies bedeutet, dass vorzugsweise alle Parameter frei programmierbar sein müssen. Dies wird dadurch erreicht, dass alle für die Regelung relevanten Grössen (Reglerverstärkung, Offsets, Proportional-, Integral,- Differential-Anteile) nicht fest "verdrahtet" sind, sondern jederzeit durch Überschreiben der Werte im Speicher geändert werden können. Daher ist dieser Funktionsblock mit allen variablen Funktionsblöcken verbunden und speist die Verstärkerblöcke **331** bis **336** sowie **321** bis **326,** die Offsetkompensationen, die Koordinaten-Transformationsblöcke **341** bis **346** und die Regler mit Parametern.

**Figur 4** zeigt, dass nicht nur die Parameter änderbar sind, sondern auch die Struktur des Reglers angepasst werden kann. Als Beispiel dafür wird die Kennlinienentzerrung eines Sensors mittels der Look-Up-Table **41** angegeben.

Angenommen, während der Lebensdauer eines Laserkommunikationsterminals (ca. 10 Jahre) verändere sich ein optischer Sensor durch die jahrelange Einwirkung von Hitze und Kälte, kosmischer Strahlung, Vakuum etc. derart, dass seine zunächst lineare Kennlinie sich zunehmend verzerrt und nichtlinear wird, würde dies mit herkömmlichen Systemen den Ausfall des Terminals und damit einen nicht mehr kommunikationsfähigen Satelliten bedeuten.

Demgegenüber bleibt mit einer adaptiven Regelung, bei der sowohl die Parameter als auch die Struktur nachträglich veränderbar sind, das System weiterhin funktionsfähig. Es muss lediglich ein Update der Signalprozessor-Software durchgeführt werden und die Struktur des Reglers kann so angepasst werden, dass z. B. die Kennlinie des betroffenen Sensors wieder linearisiert wird.

Die Vorrichtung nach der vorliegenden Erfindung kann mit an sich bekannten Anordnungen zur Strahlausrichtung und zur Kompensation der Strahllaufzeit mittels Vorhaltewinkeln arbeiten, da sie für das Prinzip der adaptiven Regelung mittels digitaler Signalverarbeitungssysteme nach der vorliegenden Erfindung nur von untergeordneten Bedeutung sind.

Die oben dargelegten Ausführungsbeispiele sind lediglich als Veranschaulichung der Anwendung eines solchen Systems zu verstehen. Andere sich für Fachleute sofort daraus er-gebende beispiele beinhalten jedoch auch die Grundgedanken der Erfindung. Insbesondere bezieht sich die vorliegende Erfindung auf eine Vorrichtung zur Steuerung gemäß der Ansprüche.

## Patentansprüche

1. Vorrichtung zur Steuerung und Regelung der Laserstrahlausrichtung in Satelliten-Laserkommunikationssystemen zwischen Satelliten, bei welcher zur Ausrichtung des Laserstrahls ein Digital-Signalprozessor (**24**) und ein Interface (**27**) eingesetzt wird, wobei zur Strahldetektion eine Kombination von Sensoren (**171, 172, 173**) zur Grob- und Feindetektion sowie zur Messung eines Vorhaltewinkels und/oder zur Strahlablenkung eine Kombination von Aktuatoren (**174, 175, 176**) zur Grob- und Fein-Ausrichtung sowie gegebenenfalls auch zur Einstellung des Vorhaltewinkels vorhanden sind,
**dadurch gekennzeichnet, dass**
es sich bei dem Interface **(27)** um eine on-board Datenhandhabungs-Schnittstelle (OBDH-Interface) handelt, das über einen Bus **(225)** an den Digital-Signalprozessor **(24)** angeschlossen ist, und über einen weiteren Bus **(10)** an eine Kommunikationssatelliteneinheit **(12)** anschliessbar ist, dass die Vorrichtung eine digitales Signalverarbeitungssystem (8) umfasst, wobei zur Strahlausrichtung eine Software im digitalen Signalverarbeitungssystem **(8)** zur adaptiven Regelung implementiert ist, dass
an den Digital-Signalprozessor **(24)** ein Programm-Speicher **(25),** eine Steuereinheit **(246)** und ein Datenspeicher (26) anschliessbar sind, und dass
dieser Digital-Signalprozessor **(24)** fähig ist, eine Parallelisierung von Rechner-Operationen durchzuführen, und einen Zwischenspeicher **(240)** für Gleitkomma- und Festkomma-operationen, eine arithmetisch/logische Alu-Einheint (241), einen Multiplizieres (242) sowie einen Schieberegister (243) umfasst, wobei an dem Zwischenspeicher (240) mindestens die arithmetisch/logische ALU-Einheit **(241),** der Multiplizierer **(242)** sowie der Schieberegister **(243)** angeschlossen sind.

2. Vorrichtung nach Anspruch **1,**
**dadurch gekennzeichnet, dass**
zu einer Strahlregelung eine Kombination von Regelalgorithmen zur Grob- und Feinregelung sowie zur Steuerung eines Vorhaltewinkels auf dem Digital-Signalprozessor (30; 24) implementiert wird, wobei sie in ihrer Struktur und ihren Parametern frei programmiert werden.

3. Vorrichtung nach einem der Ansprüche **1** oder **2,**
**dadurch gekennzeichnet, dass**
zur Korrektur von Degradationserscheinungen der Sensoren (**171, 172, 173**) und/oder der Aktuatoren **(174, 175, 176)** je eine parametrierbare Verstärkerstufe **(321, 322, 323, 324, 325, 326)** und/oder eine parametrierbare Offsetkompensation **(351** bis **356)** und/oder eine parametrierbare Koordinatentransformation implementiert ist.

4. Vorrichtung nach einem der Ansprüche **1** bis **3,**
**dadurch gekennzeichnet, dass**
Parameter, die zur adaptiven Regelung benutzt werden, durch die auf dem Digital-Signalprozessor **(24)** implementierte Software gemeinsam in einer Speicherbank **(36)** gespeichert werden.

5. Vorrichtung nach einem der Ansprüche **1** bis **4.**
**dadurch gekennzeichnet, dass**
der Digital-Signalprozessor (**24**) über je einen Bus (**221** bzw. **222**) zwischen einem Eingangs-Interface **(21)** und einem Ausgangs-Interface **(23)** eingefügt ist, wobei diese Interfaces **(21, 23)** Schnittstellen zwischen einer analogen und einer digitalen Seite darstellen, dass an das Eingangs-Interface **(21)** über Busse **(181, 182, 183)** die Sensoren (**171, 172,** 173) angeschlossen sind, und dass an das Ausgangs-Interface **(23)** über Busse (**191, 192,** 193) die Aktuatoren (**174, 175, 176)** angeschlossen sind, und mit denen die Ausrichtung des Laserstrahls auf eine Gegenstation erfolgt.

6. Vorrichtung nach einem der Ansprüche **1** bis **5.**
**dadurch gekennzeichnet, dass**
der Digital-Signalprozessor (**24**) einen Zugriffsgenerator (**245**) für den Programmspeicher (**25**) und eine über Busse an den Zwischenspeicher (**240**) angeschlossene Steuereinheit (**246**) umfasst, **dass** dieser Zugriffsgenerator (**245**) und die Steuereinheit (**246**) unter sich über Busse und einen Befehlzwischenspeicher (**247**) verbunden sind, **dass** im Zwischenspeicher (**240**) Operanden für Berechnungen und Gleitkomma- und Festkommazahlen abgelegt werden, und **dass** der Prozessor (**24**) über drei separate spezialisierte zeitlich parallel arbeitende Recheneinheiten verfügt, wobei eine erste ALU-Einheit **(241)** für lineare mathematische Operationen und/oder logische Verknüpfungen, eine zweite als Multiplizierer **(242)** ausgebildete Einheit für Gleitkomma- oder Festkommamultiptikationen in einem einzigen Zyklus und eine dritte als Schieberegister (**243**) ausgebildete Einheit für Rechts- und Linksverschiebungen sowie Rotation von Operanden vorgesehen ist.

7. Vorrichtung nach einem der Ansprüche **1** bis **6,**
**dadurch gekennzeichnet, dass**
sie ein zum Senden und Empfangen von mit Daten modulierten Laserstrahlen ausgestaltetes Endgerät (**1**) umfasst, das über eine optische Verbindung (**3**) mit einem optischen System (**4**) verbunden ist, das einerseits über eine Höchstfrequenzverbindung (**7**) an ein Kommunikationssystem (**9**) und andererseits über Busse (**5, 6**) an ein Strahlausrichtsystem (**8**) angeschlossen ist, und dass das Kommunikationssystem (**9**) und das Strahlausrichtsystem (**8**) über Datenverbindungen (**10, 11**) mit einer Kommunikationseinheit (**12**) verbunden sind.

8. Vorrichtung nach einem der Ansprüche **1** bis **7,**
**dadurch gekennzeichnet, dass**
der funktionale Aufbau der Vorrichtung durch eine Ersatzschaltung dargestellt ist, die einen als Mehrgrössenregler arbeitenden Digital-Signalprozessor (**30**) umfasst, der mit je zwei Ausgangssignalen eines Akquisitionssensors (**171**), eines Nachführsensors (**172**) und eines Vorhaltesensors (**173**) arbeitet, die sich durch ihren Sichtbereich und ihre Bandbreite unterscheiden,
dass diese Sensor-Signale nach einer Koordinatentransformation (**341, 342, 343**) und Sollwertaufschaltung (**35**) einer Regelung (**311** ... **316**) zugeführt werden,
dass zur Korrektur der Abbildungsverhältnisse und ebenfalls zur Kompensation von Justage-Ungenauigkeiten nach der Regelung (**311** ... **316**) eine weitere Koordinatentransformation (**344, 345, 346**) durchgeführt wird,
dass danach einem ersten Aktuator (**174**) Signale für eine Grob-Ausrichtung mit einem zweiachsigen Ausrichtmechanismus, einem zweiten Aktuator (**175**) Signale für eine Fein-Ausrichtung mit einem zweiachsigen Kippspiegel für eine Strahlablenkung in einem geringen Winkelbereich mit hoher Bandbreite und einem dritten Aktuator (**176**) Signale für einen Winkel-Vorhalt mit einem zweiachsigen Vorhaltespiegel zur Kompensation der Strahllaufzeit zwischen Basis- und Gegenstation geliefert werden,
dass diese drei Aktuatoren über digital Regelalgorithmen angesteuert werden, die auf dem Signalprozessor implementiert und sowohl in ihrer Struktur als auch in ihren Parametern frei programmierbar sind,
und dass die Regelung einen Grob-Ausricht-Regler (**311, 312**), einen Fein-Ausricht-Regler (**313, 314**) und einen Winkel-Vorhalte-Regler (**315, 316**) umfasst, wobei diese Regler **(311/312, 313/314,** und **315/316**) jeweils doppelt ausgeführt sind, da jeder Sensor und jeder Aktuator zweiachsig arbeitet.

9. Vorrichtung nach Anspruch **8,**
**dadurch gekennzeichnet, dass**
zwischen dem Sensor **(171, 172, 173)** und der entsprechenden Koordinatentransformation (**341, 342, 343**)
jeweils eine Look-Up-Table-Schaltung (**41**) eingefügt ist.

10. Vorrichtung nach Anspruch **8** oder **9,**
**dadurch gekennzeichnet, dass**
jedem Aktuator (**174, 175, 176**) eine Offset-Stufe (**351** ... **356**) und eine vorzugsweise gewichtete Verstärker-Stufe (**321, 322; 323, 324; 325, 326**) vor- und jedem Sensor (**171, 172, 173**) eine vorzugsweise gewichtete Verstärker-Stufe (**331, 332; 333, 334; 335, 336**) und eine Offset-Stufe (**361** ... **366**) nachgeschaltet ist.

## Claims

1. Device for the controlling and regulation of the laser beam adjustment in satellite laser communication systems between satellites, with which for the adjustment of the laser beam a digital signal processor (24) and an interface (27) are employed, whereby for beam detection a combination of sensors (171, 172, 173) for the coarse- and fine-detection as well as for the measurement of a lead angle and/or for beam deflection a combination of actuators (174, 175, 176) for the coarse and fine adjustment as well as if necessary also for the adjustment of the lead angle are present,
**characterized in that**
the interface (27) is an onboard data handling interface (OBDH-interface), that is connected via a bus (225) to the digital signal processor (24) and via a further bus (10) connectable to a communication satellite unit (12),
that the device comprises a digital signal processing system (8), whereby
for the beam adjustment a software is implemented for adaptive regulation in the digital signal processing system (8), that
to the digital signal processor (24) a program memory (25), a control unit (246) and a data memory (26) are connectable, and that
this digital signal processor (24) is able to accomplish a parallelism of computer operations and comprises a buffer memory (240) for floating decimal point and fixed-point operations, an arithmetic/logical ALU-unit (241), a multiplier (242) as well as a shift register (243), whereby to the buffer memory (240) at least the
arithmetic/logical ALU-unit (241), the multiplier (242) as well as the shift register (243) are attached.

2. Device according to claim 1,
**characterized in that**
for a beam regulation a combination of rule algorithms is implemented on the digital signal processor (30; 24) for the coarse and fine adjustment as well as for the controlling of a lead angle, whereby they are freely programmed in their structure and their parameters.

3. Device according to one of the claims 1 or 2,
**characterized in that**
for the correction of degradation occurrences of the sensors (171, 172, 173) and/or the actuators (174, 175, 176) one parameterizable amplifier stage (321, 322, 323, 324, 325, 326) and/or a parameterizable offset compensation (351 to 356) and/or a parameterizable coordinate transformation each are implemented.

4. Device according to one of the claims 1 to 3,
**characterized in that**
parameters, which are used for the adaptive regulation, are stored together in a memory bank (36) by software implemented on the digital signal processor (24).

5. Device according to one of the claims 1 to 4,
**characterized in that**
the digital signal processor (24) is inserted via one bus each (221 or 222) between an input interface (21) and an output interface (23), whereby these interfaces (21, 23) represent interfaces between an analog and a digital side,
that to the input interface (21) the sensors (171, 172, 173) are attached via busses (181, 182, 183), and that to the output interface (23) the actuators (174, 175, 176) are attached via busses (191, 192, 193), and with those the adjustment of the laser beam on a counterpart station takes place.

6. Device according to one of the claims 1 to 5,
**characterized in that**
the digital signal processor (24) comprises an access generator (245) for the program memory (25) and a control unit (246) attached via busses to the buffer memory (240), that this access generator (245) and the control unit (246) among themselves are connected by busses and a command buffer memory (247), that in the buffer memory (240) operands for computations and floating decimal point and fixed-point numbers are filed, and that the processor (24) has three separate specialized temporally parallel operating arithmetic, whereby a first ALU-unit (241) for linear mathematical operations and/or logic combinations, a second unit, designed as multiplier (242), for floating decimal point or fixed-point multiplications in only one cycle, and a third unit, designed as shift register (243), for right and left shifts as well as rotation of operands.

7. Device according to one of the claims 1 to 6,
**characterized in that**
it comprises a terminal (1) designed for transmitting and receiving laser beams modulated with data, which is connected via an optical connection (3) with an optical system (4), that is on the one hand connected via a very high frequency connection (7) to a communication system (9) and on the other hand via busses (5, 6) to a beam adjustment system (8), and that the communications system (9) and the beam adjustment system (8) are connected via data links (10, 11) with a communications unit (12).

8. Device according to one of the claims 1 to 7,
**characterized in that**
the functional setup of the device is represented by an equivalent circuit, that comprises a digital signal processor (30) working as multi-parameter control, which is operating with two output signals each of an acquisition sensor (171), a tracking sensor (172) and a lead sensor (173), which differ by their range of vision and their range,
that these sensor signals are supplied to a control (311... 316) after a coordinate transformation (341, 342, 343) and set-point combination (35),
that for the correction of the reproduction ratios and likewise for the compensation of adjustment inaccuracies after the regulation (311... 316) a further coordinate transformation (344, 345, 346) it is carried out,
that thereafter signals are delivered
to a first actuator (174) for a coarse adjustment with a two-axis orientation mechanism, to a second actuator (175) signals for a fine adjustment with a two-axis pivot mirror for a beam deflection in a small angle range with high bandwidth,
and to a third actuator (of 176) signals for a lead angle with a two-axis lead mirror for the compensation of the beam run-time between base- and counterpart station,
that these three actuators are controlled via digital rule algorithms, which are implemented on the signal processor and where both their structure and their parameters are freely programmable, and that the control comprises a coarse adjustment controller (311, 312), a fine adjustment controller (313, 314) and an angle lead controller (315, 316), whereby these controllers (311/312, 313/314, and 315/316) are redundantly implemented in each case, since each sensor and each actuator works with two axis.

9. Device according to claim 8,
**characterized in that**
in each case between the sensor (171, 172, 173) and the corresponding coordinate transformation (341, 342, 343) a Look-up table circuit (41) is inserted.

10. Device according to claim 8 or 9,
**characterized in that**
each actuator (174, 175, 176) is followed by an offset stage (351... 356) and a preferably weighted amplifier stage (321, 322; 323, 324; 325, 326) before and each sensor (171, 172, 173) a preferably weighted amplifier stage (331, 332; 333, 334; 335, 336) and an offset stage (361... 366).

## Revendications

1. Dispositif pour commander et régler le pointage d'un rayon laser dans des systèmes de communication laser entre des satellites, dans lequel un processeur numérique de signaux (24) et une interface (27) sont utilisés pour pointer le rayon laser,
pour détecter le rayon on a une combinaison de capteurs (171, 172, 173) destinée à la détection approximative et précise ainsi qu'à la mesure d'un angle de pointage avant et/ou pour dévier le rayon une combinaison d'actionneurs (174, 175, 176) destinée au pointage approximatif et précis ainsi que le cas échéant aussi à ajuster l'angle de pointage avant,
**caractérisé en ce que**
l'interface (27) consiste en une interface de traitement des données (interface OBDH) embarquée qui est raccordée au processeur numérique de signaux (24) par l'intermédiaire d'un bus (225) et peut être raccordée à une unité de satellite de communication (12) par l'intermédiaire d'un autre bus (10),
que le dispositif comprend un système numérique de traitement des signaux (8), afin de pointer les rayons un logiciel étant mis en oeuvre dans le système numérique de traitement des signaux (8) pour obtenir un réglage adaptatif,
qu'une mémoire de programmes (25), une unité de commande (246) et une mémoire de données (26) peuvent être raccordées au processeur numérique de signaux (24) et
que ce processeur numérique de signaux (24) est capable d'exécuter en parallèle des opérations de calcul et comprend une mémoire temporaire (240) pour des opérations à virgule flottante et à virgule fixe, une unité arithmétique et logique UAL (241), un multiplicateur (242) et un registre à décalage (243), au moins l'unité arithmétique et logique UAL (241), le multiplicateur (242) et le registre à décalage (243) étant raccordés à la mémoire temporaire (240).

2. Dispositif selon la revendication 1, **caractérisé en ce que**, pour régler le rayon une combinaison d'algorithmes de réglage destinés au réglage approximatif et au réglage précis ainsi qu'à la commande d'un angle de pointage avant sont mis en oeuvre sur le processeur numérique de signaux (30 ; 24), ces algorithmes étant programmés librement quant à leur structure et à leurs paramètres.

3. Dispositif selon l'une des revendications 1 ou 2, **caractérisé en ce qu'**un étage d'amplification (321, 322, 323, 324, 325, 326) paramétrable et/ou une compensation de décalage (351 à 356) paramétrable et/ou une transformation de coordonnées paramétrable sont mis en oeuvre pour corriger chacun des phénomènes de dégradation sur les capteurs (171, 172, 173) et/ou sur les actionneurs (174, 175, 176).

4. Dispositif selon l'une des revendications 1 à 3, **caractérisé en ce que** des paramètres utilisés pour le réglage adaptatif sont mémorisés ensemble dans un organe de mémoire (36) par le logiciel mis en oeuvre sur le processeur numérique de signaux (24).

5. Dispositif selon l'une des revendications 1 à 4, **caractérisé en ce que** le processeur numérique de signaux (24) est placé entre une interface d'entrée (21) et une interface de sortie (23) par l'intermédiaire d'un bus (221 ou 222) respectivement, ces interfaces (21, 23) étant des interfaces entre un côté analogique et un côté numérique, que les capteurs (171, 172, 173) sont raccordés à l'interface d'entrée (21) par des bus (181, 182, 183) et que les actionneurs (174, 175, 176) qui permettent de pointer le rayon laser vers une contre-station sont raccordés à l'interface de sortie (23) par l'intermédiaire de bus (191, 192, 193).

6. Dispositif selon l'une des revendications 1 à 5, **caractérisé en ce que** le processeur numérique de signaux (24) comprend un générateur d'accès (245) pour la mémoire de programmes (25) et une unité de commande (246) raccordée à la mémoire temporaire (240) par des bus, que ce générateur d'accès (245) et l'unité de commande (246) sont reliés entre eux par des bus et par une mémoire temporaire d'instructions (247), que des opérandes destinés aux calculs et des nombres à virgule flottante et à virgule fixe sont enregistrés dans la mémoire temporaire (240) et que le processeur (24) comporte trois unités de calcul spécialisées et distinctes qui fonctionnent en même temps, une première unité arithmétique et logique (241) étant prévue pour des opérations mathématiques linéaires et/ou pour des fonctions logiques, une deuxième unité sous forme de multiplicateur (242) pour des multiplications à virgule flottante et à virgule fixe dans un seul cycle et une troisième unité sous forme de registre à décalage (243) pour décaler à droite et à gauche ainsi que pour tourner des opérandes.

7. Dispositif selon l'une des revendications 1 à 6, **caractérisé en ce qu'**il comprend un terminal (1) qui est conçu pour envoyer et pour recevoir des rayons laser modulés à l'aide de données et qui est relié à un système optique (4) par l'intermédiaire d'une liaison (3) optique, lequel système est raccordé d'une part à un système de communication (9) par l'intermédiaire d'une liaison à ultra haute fréquence (7) et d'autre part à un système pointeur de rayons (8) par l'intermédiaire de bus (5, 6) et que le système de communication (9) et le système pointeur de rayons (8) sont reliés à une unité de communication (12) par l'intermédiaire de circuits de données (10, 11).

8. Dispositif selon l'une des revendications 1 à 7, **caractérisé en ce que**
la structure fonctionnelle du dispositif est représentée par un réseau équivalent comprenant un processeur numérique de signaux (30) qui fonctionne comme régulateur à variables multiples et avec respectivement deux signaux de sortie d'un capteur d'acquisition (171), d'un capteur de poursuite (172) et d'un capteur de dérivation (173) qui se différencient par leur portée optique et par leur largeur de bande,
que ces signaux de capteur sont acheminés à un réglage (311 à 316) après une transformation de coordonnées (341, 342, 343) et une adjonction de valeur prescrite (35),
que, après le réglage (311 à 316), une autre transformation de coordonnées (344, 345, 346) a lieu pour corriger les conditions de reproduction ainsi que pour compenser les inexactitudes d'ajustement,
qu'ensuite, afin de compenser la durée de parcours du rayon entre la station de base et la contre-station, des signaux pour un pointage approximatif à l'aide d'un mécanisme biaxial de pointage sont fournis à un premier actionneur (174), des signaux pour un pointage précis à l'aide d'un miroir basculant biaxial pour dévier les rayons dans une petite gamme d'angles à largeur de bande élevée sont fournis à un deuxième actionneur (175) et des signaux pour un pointage avant de l'angle à l'aide d'un miroir biaxial de pointage avant sont fournis à un troisième actionneur (176),
que ces trois actionneurs sont commandés par des algorithmes numériques de réglage qui sont mis en oeuvre sur le processeur de signaux et qui peuvent être librement programmés aussi bien quant à leur structure que quant à leurs paramètres,
et que le réglage comprend un régulateur de pointage approximatif (311, 312), un régulateur de pointage précis (313, 314) et un régulateur de pointage avant d'angle (315, 316), ces régulateurs (311, 312 ; 313, 314 ; 315, 316) étant chacun dédoublés puisque chaque capteur et chaque actionneur fonctionne sur deux axes.

9. Dispositif selon la revendication 8, **caractérisé en ce qu'**une table de conversion (41) est placée respectivement entre le capteur (171, 172, 173) et la transformation de coordonnées (341, 342, 343) correspondante.

10. Dispositif selon la revendication 8 ou 9, **caractérisé en ce qu'**un étage de décalage (351 à 356) et un étage d'amplification (321, 322 ; 323, 324 ; 325, 326) de préférence pondéré se trouvent en amont de chaque actionneur (174, 175, 176) et un étage d'amplification (331, 332 ; 333, 334 ; 335, 336) de préférence pondéré et un étage de décalage (361 à 366) se trouvent en aval de chaque capteur (171, 172, 173).
